(19) Europäisches Patentamt / European Patent Office / Office européen des brevets

(11) **EP 2 537 697 A1**

(12) **DEMANDE DE BREVET EUROPEEN**

(43) Date de publication:
**26.12.2012 Bulletin 2012/52**

(51) Int Cl.:
**B60K 15/035** (2006.01)     **F02M 25/08** (2006.01)

(21) Numéro de dépôt: **11170823.6**

(22) Date de dépôt: **21.06.2011**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(71) Demandeur: **Inergy Automotive Systems Research (Société Anonyme)**
**1120 Bruxelles (BE)**

(72) Inventeurs:
• **Criel, Bjorn**
**1750 Sint-Martens-Lennik (BE)**

• **Cuvelier, Vincent**
**430056 Wuhan (CN)**
• **Hill, David**
**Commerce Township, MI Michigan 48382 (US)**
• **Van Schaftingen, Jules-Joseph**
**1300 Wavre (BE)**

(74) Mandataire: **de la Bigne, Guillaume Michel Marie et al**
**Cabinet Lhermet La Bigne & Remy**
**11, boulevard de Sébastopol**
**75001 Paris (FR)**

(54) **Dispositif de ventilation pour système à carburant de véhicule hybride**

(57)     Dispositif de ventilation comprenant :

1) une première enceinte (I) comprenant un premier passage (1) susceptible d'être connecté respectivement à la sortie d'un canister et à l'atmosphère, ainsi qu'un dispositif d'obturation normalement fermé (F), mais susceptible de s'ouvrir pour libérer le premier passage (1) ;

2) une seconde enceinte (II) comprenant un second passage (2) susceptible d'être connecté à l'entré d'un canister et à un réservoir à carburant, ainsi qu'un dispositif d'obturation normalement ouvert (O), mais susceptible de se fermer pour obturer le second passage (2), ce second passage (2) étant séparé du premier passage (1) et n'étant pas en communication avec lui à l'intérieur du dispositif;

3) un clapet ou un couple de clapets SPD (sécurité en pression et en dépression) situé dans ou fixé sur un by-pass du premier passage (1), de sorte à pouvoir établir une connexion entre les extrémités dudit passage (1) lorsque le dispositif d'obturation (F) est fermé et lorsqu'il y a respectivement une sur- ou une dépression de part et d'autre du passage.

Système à carburant équipé d'un tel dispositif et véhicule hybride incorporant un tel système à carburant.

*Fig. 2*

EP 2 537 697 A1

**Description**

La présente invention concerne un dispositif de ventilation pour système à carburant de véhicule hybride, ainsi qu'un système à carburant équipé d'un tel dispositif et qu'un véhicule hybride incorporant un tel système à carburant.

On parle généralement de véhicule hybride dans le cas d'un véhicule associant l'utilisation d'un moteur thermique et d'un moteur électrique.

Il existe un principe général de fonctionnement pour les véhicules hybrides qui consiste à faire fonctionner soit le moteur électrique, soit le moteur thermique, soit les deux en même temps selon les modèles.

Un des principes particuliers est le suivant :

- lors des phases stationnaires (où le véhicule est immobile), les deux moteurs sont à l'arrêt;
- au démarrage, c'est le moteur électrique qui assure la mise en mouvement de la voiture, jusqu'à des vitesses plus élevées (25 ou 30 km/h);
- lorsque des vitesses plus élevées sont atteintes, le moteur thermique prend le relais ;
- en cas de grande accélération, on observe la mise en marche des deux moteurs à la fois, qui permet d'avoir des accélérations équivalentes au moteur de même puissance, voire supérieures;
- en phase de décélération et de freinage, l'énergie cinétique est utilisée pour recharger les batteries (à noter que cette fonctionnalité n'est pas disponible sur tous les moteurs hybrides disponibles sur le marché à l'heure actuelle).

Il résulte de ce principe que le moteur thermique ne fonctionne pas en permanence et que dès lors, les phases de purge du canister (filtre à charbon actif qui évite de relarguer à l'atmosphère, des vapeurs de carburant) ne peuvent pas être assurées normalement puisque lors de celles-ci, de l'air éventuellement préchauffé est mis à circuler dans le canister pour le régénérer (c.à.d. pour désorber les vapeurs de carburant qui y sont adsorbées), cet air étant ensuite admis dans le moteur pour y être brûlé.

Dès lors, pour éviter de charger le canister inutilement, on bloque généralement par défaut la communication entre le réservoir et celui-ci; il en résulte que les réservoirs à carburant de ces véhicules sont généralement mis sous pression (typiquement, à une pression de l'ordre de 300 - 400 mbar), ce qui se fait généralement par un élément fonctionnel situé après les clapets de ventilation, souvent appelé FTIV (Fuel Tank Isolation Valve) et qui empêche la ventilation (dégazage) du réservoir en dehors des situations de remplissage. Cet élément comprend généralement deux soupapes de sécurité (calibrées aux pressions maximales inférieure et supérieure d'utilisation du réservoir) et un pilotage généralement électrique pour pouvoir mettre à pression atmosphérique le réservoir avant remplissage.

Le positionnement de la FTIV dans le système pose en fait problème en pratique:

- positionnée en amont du canister, elle évite l'aspiration de vapeurs venant du réservoir lors de la purge du canister, mais par contre, elle coupe le système à carburant en deux zones, ce qui rend les tests imposés par la régulation OBD (On Board Diagnosis) plus difficiles
- positionnée en aval du canister, c'est l'inverse: elle facilite l'OBD mais n'empêche pas l'aspiration de vapeurs du réservoir et ce bien que d'un point de vue charge du canister, il n'y a pas de différence entre les deux positionnements (puisque même en positionnement aval, étant donné qu'il n'y a pas de débit, il n'y a pas de charge du canister même si celui-ci est connecté au réservoir).

Une solution à ce problème consiste en l'utilisation de deux clapets séparés, l'un, normalement fermé mais ouvert pour permettre la ventilation lors du remplissage et l'autre permettant de déconnecter le réservoir du canister lors de la purge. Une telle solution est par exemple décrite dans les brevets US 6,167,920 et US 7,448,367, mais elle est coûteuse et requiert généralement le recours à de l'électronique. Or, un pilotage mécanique permettrait d'augmenter la fiabilité/robustesse de la solution, de la simplifier et de réduire son coût étant donné l'absence d'électronique.

La présente invention vise à résoudre ces problèmes et à fournir une architecture simplifiée, permettant le recours à un seul dispositif de ventilation (voire à un seul clapet) et ne nécessitant pas le recours à de l'électronique.

Elle est basée sur l'idée d'utiliser un dispositif communiquant à la fois avec la tubulure de remplissage (pour détecter un remplissage) et avec le réservoir, le canister et l'atmosphère (pour permettre la ventilation au remplissage du réservoir et sa régulation de pression, tout en évitant de relarguer des vapeurs de carburant à l'atmosphère), la connexion avec le canister étant double: à la fois en amont et en aval de celui-ci, de sorte à combiner les avantages des deux positionnement sans en subir les inconvénients.

La présente invention concerne dès lors un dispositif de ventilation comprenant :

1) une première enceinte (I) comprenant un premier passage (1) susceptible d'être connecté respectivement à la sortie d'un canister et à l'atmosphère, ainsi qu'un dispositif d'obturation normalement fermé (F), mais susceptible de s'ouvrir pour libérer le premier passage (1);

2) une seconde enceinte (II) comprenant un second passage (2) susceptible d'être connecté à l'entré d'un canister et à un réservoir à carburant, ainsi qu'un dispositif d'obturation normalement ouvert (O), mais susceptible de se fermer pour obturer le second passage (2), ce second passage (2) étant séparé du premier passage (1) et n'étant pas en communication avec lui à l'intérieur du dispositif;

3) un clapet ou un couple de clapets SPD (sécurité en pression et en dépression) situé dans ou fixé sur un by-pass du premier passage (1), de sorte à pouvoir établir une connexion entre les extrémités dudit passage (1) lorsque le dispositif d'obturation (F) est fermé et lorsqu'il y a respectivement une sur- ou une dépression de part et d'autre du passage.

Par «dispositif de ventilation», on entend désigner un ou plusieurs éléments creux reliés entre eux et susceptible d'être inséré(s) dans un circuit de ventilation d'un système à carburant et d'être traversé(s) par des vapeurs de carburant.

A cet effet, le dispositif comprend deux enceintes (I, II) c.à.d. deux parois (pas forcément d'un seul tenant) délimitant chacune un volume interne comprenant respectivement les premier et second passages (1, 2), c.à.d. des sous-volumes comprenant une entrée et une sortie et délimités par un cloisonnement de sorte à forcer les vapeurs de carburant à circuler de l'entrée vers la sortie ou vice versa selon la différence de pression.

Bien que les deux volumes internes puissent communiquer entre eux et/ou comprendre une partie commune, les deux passages (1, 2) sont eux par contre isolés (non en communication l'un avec l'autre à l'intérieur du dispositif).

De préférence, les enceintes (I, II) sont intégrées dans un boîtier commun. De préférence, elles sont à base de matière plastique.

De préférence, les enceintes (I, II) comprennent des connections ou embouts aux extrémités des passages (1, 2) et ce pour faciliter leur connexion directe aux éléments susmentionnés et/ou à une ligne connectée à ces éléments. Ces connections/embouts sont de préférence d'un seul tenant avec la paroi des enceintes. Lorsque les enceintes (I, II) sont intégrées dans un boîtier commun en matière plastique, ces embouts sont de préférence moulés d'un seul tenant avec ce boîtier, de préférence par moulage par injection.

Des matières plastiques qui conviennent bien sont les polymides (PA) et les polyacétals tels que le POM (poly-oxy-méthylène), qui sont faciles à injecter.

Selon l'invention, les passages (1, 2) dans les deux enceintes (I, II) sont chacun muni d'un dispositif d'obturation c.à.d. d'un dispositif comprenant généralement un élément mobile qui, selon sa position, permet soit de libérer soit d'obturer lesdits passages. Ces dispositifs peuvent comprendre des flotteurs (tels que par exemple les flotteurs coniques décrits dans la demande WO 2007/085585 au nom de la demanderesse, dont le contenu à cet effet est incorporé par référence dans la présente demande), des membranes ou diaphragmes... ou tout autre élément mobile soit par une action mécanique soit par une action pneumatique (pression d'un fluide). Il s'agit de préférence de membranes (diaphragmes).

Le dispositif selon l'invention comprend également un clapet ou un couple de clapets SPD permettant de faire en sorte que la pression interne du réservoir reste dans une gamme de fonctionnement déterminée. De tels clapets sont bien connus de l'homme du métier et comprennent généralement un obturateur (bille par exemple) et un ressort (ou un autre élément opposant une résistance mécanique au mouvement de l'obturateur) dont le tarage est adapté pour qu'il ne se rétracte et libère l'obturateur qu'à partir d'un seuil de pression donné. Selon l'orientation de cet ensemble ressort/obturateur, il permet d'assurer une sécurité en pression ou en dépression.

Selon l'invention, le (couple de) clapet(s) SPD situé dans ou fixé sur un by-pass du premier passage (1). On entend par «by-pass», un passage (1') établissant une communication entre un point en amont et un point en aval de l'endroit du passage (1) que le dispositif d'obturation vient obturer.

La présente invention concerne également un système à carburant équipé d'un dispositif de ventilation tel que décrit ci-dessus, et comprenant à cet effet : 1) un canister connecté par sa sortie à une extrémité du premier passage (1), l'autre extrémité du passage (1) étant en communication avec l'atmosphère; ledit canister étant connecté par son entrée, à une extrémité du second passage (2); 2) un réservoir à carburant connecté à l'autre extrémité du second passage (2), ledit réservoir comprenant une tubulure de remplissage connectée au dispositif d'obturation normalement fermé (F) du premier passage (1) de sorte à permettre son ouverture lors de la détection d'un événement de remplissage.

Par «canister», on entend généralement désigner une enceinte contenant une substance adsorbant les vapeurs de carburant, usuellement du charbon actif. Le rôle du canister est d'éviter la libération de vapeurs de carburant dans l'atmosphère. Cette enceinte comprend une entrée, par où les vapeurs issues du réservoir à carburant pénètrent, et une sortie, par laquelle l'air épuré en vapeurs de carburant, peut sortir. A noter que lorsque le réservoir est en dépression, de l'air en provenance de l'atmosphère circule de la sortie du canister vers son entrée.

Le carburant auquel est destinée l'invention peut être de l'essence, du diesel, un biocarburant...et peut avoir une teneur en alcool de 0 à 100%.

Par réservoir ou tubulure, on désigne des corps creux généralement en métal ou obtenus par moulage et/ou par coextrusion de matière(s) plastique(s), et destinés respectivement au stockage et au remplissage du volume de stockage de carburant.

Le terme «connecté» utilisé ci-dessus désigne généralement être directement fixé sur ou être relié par une ligne de connexion. Généralement, la connexion se fait par une ligne. Les connexions aux entrées et sorties du dispositif de ventilation se font généralement par des lignes qui sont en fait des tubes creux permettant le passage des vapeurs de carburant et de l'air. Par contre, la connexion de la tubulure de remplissage au dispositif d'obturation normalement fermé (F) du premier passage (1) se fait généralement par une ligne dite de transmission, ayant pour but de transmettre le signal d'ouverture/fermeture de la tubulure de remplissage.

Cette transmission peut être:

1) Mécanique: la ligne de transmission renferme alors de préférence un câble qui actionne (ouvre/ferme) le dispositif d'obturation

2) Pneumatique: la ligne de transmission est alors de préférence mise sous pression. La création de cette pression est mise à profit pour provoquer un déplacement du dispositif d'obturation ou au contraire, pour empêcher tout mouvement de celui-ci. Cette solution présente des difficultés tant au niveau du dimensionnement (encombrement au niveau de la tête où il faudrait prévoir la place pour une sorte de piston) que pour l'utilisateur final (difficulté potentielle de remettre le bouchon ou de refermer la trappe s'il faut comprimer un piston).

De plus, dans le cas où on mettrait la pression pour fermer le dispositif d'obturation, il faudrait garantir cette pression dans le temps, et ce en tenant compte de paramètres extérieurs tels que la température ou la pression ambiante. Il est dès lors préférable d'inverser le principe décrit ci-dessus, et de ne mettre la ligne sous pression que lorsqu'un veut ouvrir le dispositif d'obturation. En effet, la pressurisation serait très brève (le temps d'un remplissage) et la tolérance sur la valeur de consigne de pression pourrait être plus large.

3) Magnétique et/ou électronique, mais il s'agit là justement de solutions coûteuses que l'on souhaite éviter dans le cadre de la présente invention.

Pour ces différentes raisons, la solution mécanique est préférée, d'autant que l'usage d'un câble est déjà effective sur certains véhicules pour ouvrir la trappe de remplissage depuis le poste de conduite du véhicule.

Dans le système à carburant selon l'invention, la ligne de connexion entre l'entrée du canister et une extrémité du second passage (2) comprend de préférence un raccord/une connexion ou partie en T permettant le piquage d'une ligne vers l'aspiration du moteur, cette ligne étant de préférence munie d'une vanne permettant la purge du canister. Alternativement, le canister peut directement être équipé d'une troisième pipette (permettant également le piquage d'une ligne vers l'aspiration du moteur), cas en pratique très courant.

Dans cette variante, le dispositif d'obturation normalement ouvert (O) du second passage (2) peut être connecté (électro)magnétiquement à l'ECU (Engine Control Unit ou ordinateur de bord) de sorte à fermer le second passage (2) lors de la purge du canister. Toutefois, selon une variante préférée, l'enceinte II est en communication avec l'atmosphère (soit directement, soit via un orifice de communication avec le premier passage (1)) de sorte que lorsque la vanne de purge est ouverte, la dépression créée dans le second passage crée une différence de pression de part et d'autre du dispositif d'obturation normalement ouvert (O), et vient refermer celui-ci et se faisant, obturer le second passage (2), empêchant ainsi l'aspiration de vapeurs du réservoir à carburant.

La présente invention est illustrée de manière non limitative par les figures 1 à 3 en annexe, qui en décrivent certaines variantes préférées. La figure 1 illustre notamment un système à carburant selon l'invention; la figure 2, un dispositif de ventilation selon l'invention et la figure 3, une variante préférée d'activation mécanique dudit dispositif.

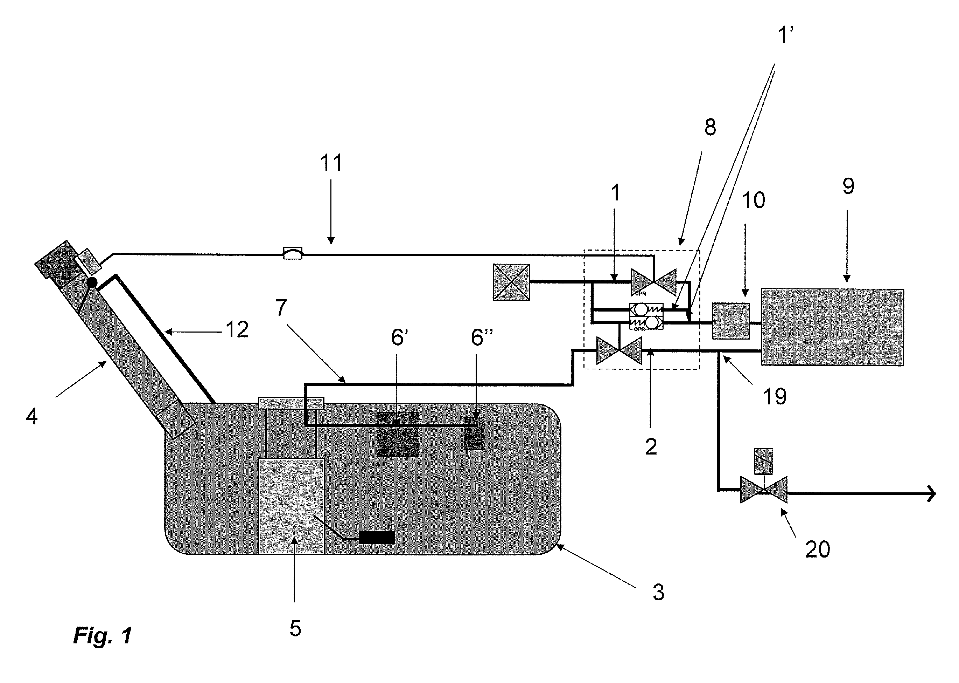

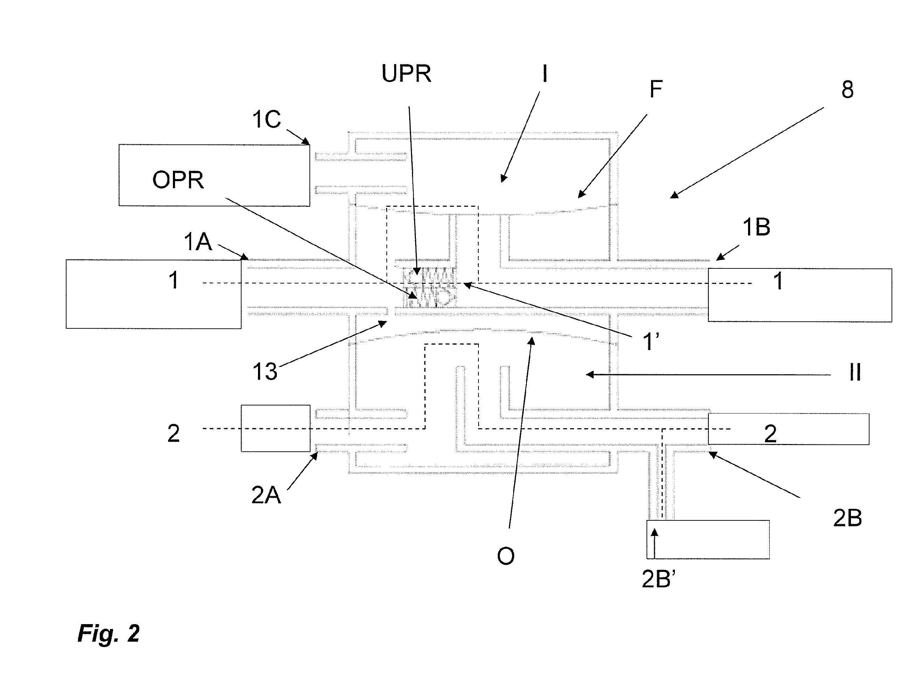

Le système à carburant de la figure 1 comprend un réservoir à carburant (3) muni d'une tubulure de remplissage (4), d'un module pompe/jauge (5) et de clapets de ventilation (FLVV (6) ou Fill Limit Vent Valve, et ROV (6') ou Roll Over Valve, bien connus de l'homme du métier) montés sur et communiquant avec une ligne de ventilation (7) allant du réservoir (3) vers une extrémité du passage (2) dans un dispositif de ventilation selon l'invention (8) (qui est schématisé sur cette figure, mais représenté en détail à la figure 2). Ce système comprend également un canister (9) d'où partent deux lignes aboutissant au dispositif de ventilation (8): une ligne sur laquelle est fixée un dispositif OBD (10) et qui est reliée à une extrémité du premier passage (1) dans le dispositif (8); et une ligne qui est reliée à une extrémité du second passage (2) du dispositif (8) et qui comprend un raccord/une connexion ou partie en T (19) d'où part une ligne connectée à l'aspiration du moteur (qui n'est pas représenté), cette ligne étant munie d'une vanne de purge (20) pour le canister.

Le système à carburant de la figure 1 comprend également une ligne dite «signal line» (11) qui remonte depuis le dispositif de ventilation (8) jusqu'en tête de tubulure (4). Cette ligne transmet le signal d'ouverture / fermeture de la trappe et/ou du bouchon au dispositif (8) et en particulier, au dispositif d'obturation normalement fermé (F) de celui-ci.

Enfin, le système à carburant de la figure 1 comprend également une ligne (12) partant de la tête de la tubulure (4) et aboutissant dans le dôme vapeur du réservoir (3), le rôle de cette ligne étant de permettre les tests OBD tels que requis par la législation de certains pays (tels que les Etats-Unis), la tête de tubulure faisant partie du périmètre à tester en OBD.

La figure 2 (schéma de principe, sur lequel le dispositif actionnant le diaphragme n'est pas représenté) détaille le dispositif de ventilation (8), qui comprend:

1) une enceinte supérieure (I), munie d'un diaphragme (F), dont le rôle (par défaut) est de fermer le premier passage (1) entre l'atmosphère et le canister en permanence, sauf lorsqu'on effectue le remplissage du réservoir
2) une enceinte inférieure (II), elle aussi munie d'un diaphragme (O), qui est ouvert par défaut mais dont le rôle est de fermer le second passage (2) entre le réservoir et le canister lorsqu'on purge le canister
3) un couple clapet OPR (overpressure relief) / clapet UPR (underpressure relief) ou couple SPD pour garantir la sécurité du réservoir et éviter que la pression interne ne soit trop extrême. Tarages envisageables (liste non exhaustive):

$$[-90 \text{ mbar} , +150 \text{ mbar}] \; ; \; [-200 \text{ mbar} , +200 \text{ mbar}] \; ; \; [-150 \text{ mbar} , +350 \text{ mbar}]$$

Le dispositif de ventilation (8) illustré à la figure 2 fonctionne de la manière suivante:

En fonctionnement en ventilation statique (parking) et dynamique (roulage), le premier passage (1) est fermé par le diaphragme (F). Si la pression interne atteint la pression seuil de l'OPR, celui-ci s'ouvre. Le parcours du flux d'air est alors le suivant : du réservoir vers l'embout 2A du dispositif (8) pour entrer dans le passage 2; sortie du dispositif par l'embout 2B du passage (2); entrée dans le caniser (non représenté sur la figure 2) où les vapeurs sont piégées; sortie du canister pour entrer dans le dispositif (8) par la pipette 1 B du passage 1; passage par l'OPR pour sortir du dispositif (8) par l'embout (1A) et sortir à l'atmosphère en passant éventuellement par un filtre à air. Si la pression atteint la pression seuil de l'UPR, le parcours du flux d'air est évidemment le même, mais de sens contraire.

En fonctionnement lors d'une purge canister, la vanne de purge (non représentée sur cette figure) s'ouvre et crée une dépression (typiquement de -200 mbar à -400 mbar environ) qui gagne notamment les enceintes supérieures (I) et inférieures (II) via l'embout 2B' de connexion vers la ligne d'aspiration du moteur. Dans la chambre supérieure (I), la pression seuil de l'UPR est atteinte, celui-ci s'ouvre et l'air commence à rentrer. Dans la chambre inférieure (II), le diaphragme (O) est plaqué contre son siège. En effet, il subit une différence de pression entre ses faces supérieure et inférieure qui le font se déplacer vers le bas, dès lors que la zone supérieure de l'enceinte inférieure (II) (au-dessus du diaphragme) est à pression atmosphérique grâce à un petit orifice (13) qui connecte cette zone au passage 1 (à pression atmosphérique), et que la zone inférieure de cette enceinte (II) (sous le diaphragme) est en dépression. De par la fermeture du passage (2) dans l'enceinte inférieure (II), le réservoir est momentanément déconnecté du canister, ce qui évite d'aspirer des vapeurs en provenance du réservoir durant la purge canister.

Quant au fonctionnement lors d'un remplissage, il est le suivant: en préambule du remplissage, l'utilisateur ouvre la trappe et retire le bouchon. L'un de ces deux événements est utilisé pour actionner le diaphragme (F) de la chambre supérieure via la connexion 1C. Le diaphragme (F) monte alors et libère le passage (1) dans l'enceinte supérieure (I). Le trajet du flux gazeux est dès lors le suivant: du réservoir, entrée dans le dispositif (8) par l'embout 2A; sortie par l'embout 2B pour entrer dans le caniser où les sont vapeurs piégées; sortie du canister et entrée dans le dispositif (8) par l'embout 1A; sortie vers l'atmosphère après passage éventuel dans un filtre à air. A la fin du remplissage, le bouchon est remis en place et la trappe est fermée. L'un de ces deux événements provoque la remise en place du diaphragme (F) (et son maintien dans cette position).

Il ressort clairement de ce qui précède que l'enceinte (I) est en aval du canister dans ce mode de fonctionnement et que l'enceinte (II) y est en amont. L'enceinte jouant la fonction première de la FTIV (obturation de la ligne de dégazage en dehors des situations de remplissage) est l'enceinte aval (I). L'enceinte amont (II) sert quant à elle à éviter d'aspirer des vapeurs en provenance du réservoir durant la purge du canister.

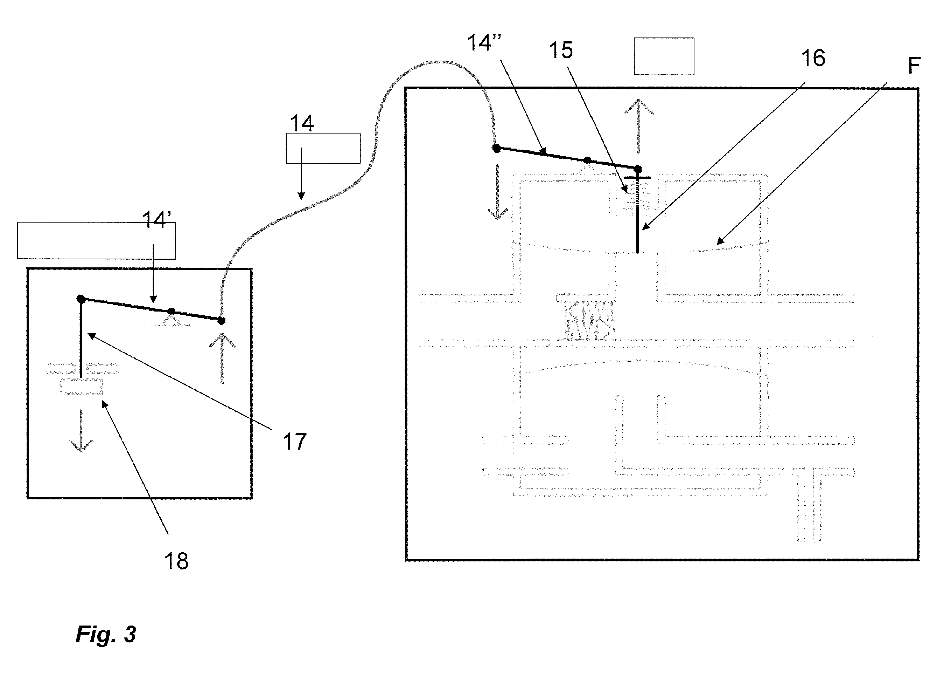

La figure 3 illustre l'utilisation d'un câble (14) comme actionneur de l'obturateur (F). Ce choix peut impliquer certaines contraintes de design:

1) il vaut mieux qu'un tel câble soit actionné en traction plutôt qu'en poussée, afin d'être sûr qu'il ne « grippe » pas dans sa gaine.
2) il faut s'assurer que l'effort pour actionner le câble ne soit pas trop élevé (pour ne pas occasionner de gêne chez l'utilisateur final), ni trop faible (pour assurer l'étanchéité du dispositif (8)).

Pour pallier à ces différents points, un système de double bras de levier a été mis en place sur la variante illustrée: aux extrémités du câble (14), deux bras de levier (14', 14") permettent:

- de faire en sorte que le câble (14) coulisse en étant tiré,
- de démultiplier l'effort exercé par l'utilisateur final et de s'assurer que le dispositif (8) reste fermé de manière étanche malgré la pression interne générée dans le système à carburant.

Les flèches sur la figure 3 indiquent les mouvements lors de l'ouverture de la trappe/retrait du bouchon; un ressort (15) positionné dans le dispositif (8) peut alors se détendre et ce faisant, actionner une tige (16) qui tire le diaphragme (F) vers le haut. A l'autre extrémité du câble, une tige (17) entraîne un bouton-poussoir (18) vers l'extérieur. Lors de la remise en place du bouchon ou la fermeture de la trappe, l'utilisateur vient presser le bouton-poussoir (18). Celui-ci actionne le bras de levier (14') situé dans la tête de la tubulure, bras qui lui-même tire sur le câble (14). A l'autre extrémité du câble (14), ce dernier tire sur le bras de levier (14"), qui à son tour pousse la tige (16) vers le bas, comprimant ainsi le retour et repoussant le diaphragme vers le bas, fermant le passage (1).

## Revendications

1. Dispositif de ventilation comprenant:

   1) une première enceinte (I) comprenant un premier passage (1) susceptible d'être connecté respectivement à la sortie d'un canister et à l'atmosphère, ainsi qu'un dispositif d'obturation normalement fermé (F), mais susceptible de s'ouvrir pour libérer le premier passage (1);
   2) une seconde enceinte (II) comprenant un second passage (2) susceptible d'être connecté à l'entré d'un canister et à un réservoir à carburant, ainsi qu'un dispositif d'obturation normalement ouvert (O), mais susceptible de se fermer pour obturer le second passage (2), ce second passage (2) étant séparé du premier passage (1) et n'étant pas en communication avec lui à l'intérieur du dispositif;
   3) un clapet ou un couple de clapets SPD (sécurité en pression et en dépression) situé dans ou fixé sur un by-pass du premier passage (1), de sorte à pouvoir établir une connexion entre les extrémités dudit passage (1) lorsque le dispositif d'obturation (F) est fermé et lorsqu'il y a respectivement une sur- ou une dépression de part et d'autre du passage.

2. Dispositif selon la revendication 1, dans lequel les enceintes (I, II) sont intégrées dans un boîtier commun.

3. Dispositif selon la revendication 2, dans lequel les enceintes (I, II) comprennent des connections ou embouts aux extrémités des passages (1, 2), ces embouts étant moulés d'un seul tenant avec le boîtier, par moulage par injection d'une matière plastique.

4. Dispositif selon l'une quelconque des revendications précédentes, dans lequel les dispositifs d'obturation (F, O) comprennent des diaphragmes.

5. - Système à carburant équipé d'un dispositif selon l'une quelconque des revendications précédentes, et comprenant:

   1) un canister connecté par sa sortie à une extrémité du premier passage (1), l'autre extrémité du passage (1) étant en communication avec l'atmosphère; ledit canister étant connecté par son entrée, à une extrémité du second passage (2);
   2) un réservoir à carburant connecté à l'autre extrémité du second passage (2), ledit réservoir comprenant une tubulure de remplissage connectée au dispositif d'obturation normalement fermé (F) du premier passage (1) de sorte à permettre son ouverture lors de la détection d'un événement de remplissage.

6. Système à carburant selon la revendication précédente, dans lequel la connexion de la tubulure de remplissage au dispositif d'obturation normalement fermé (F) du premier passage (1) se fait par une ligne dite de transmission transmettant un signal d'ouverture/fermeture de la tubulure de remplissage.

7. Système à carburant selon la revendication précédente, dans lequel la transmission est mécanique et dans lequel la ligne de transmission renferme un câble qui actionne (ouvre/ferme) le dispositif d'obturation (F).

8. Système selon la revendication 6 ou 7, comprenant une ligne de connexion entre l'entrée du canister et une extrémité du second passage (2), cette ligne comprenant un raccord/une connexion ou partie en T permettant le piquage d'une ligne vers l'aspiration du moteur, cette ligne étant munie d'une vanne permettant la purge du canister.

9. -Système selon la revendication précédente, dans lequel le dispositif d'obturation normalement ouvert (O) du second passage (2) est en communication avec l'atmosphère soit directement, soit via un orifice de communication avec le premier passage (1).

10. Véhicule hybride équipé d'un système à carburant selon l'une quelconque des revendications 5 à 9.

**Fig. 1**

EP 2 537 697 A1

8

1B

F

I

UPR

OPR

1C

1A

1

II

1'

O

13

2A

2

2B

2B'

1

2

*Fig. 2*

**Fig. 3**

EP 2 537 697 A1

**EP 2 537 697 A1**

Europäisches
Patentamt

European
Patent Office

Office européen
des brevets

# RAPPORT DE RECHERCHE EUROPEENNE

Numéro de la demande

EP 11 17 0823

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A,D | US 7 448 367 B1 (REDDY SAM R [US] ET AL) 11 novembre 2008 (2008-11-11) * colonne 3, ligne 47 - colonne 5, ligne 55 * * figure 1 * ----- | 1-10 | INV. B60K15/035 F02M25/08 |
| A | EP 1 674 318 A1 (KAUTEX TEXTRON GMBH & CO KG [DE]) 28 juin 2006 (2006-06-28) * alinéas [0023] - [0026] * * figure 1 * ----- | 1-10 | |
| A | DE 10 2009 036265 A1 (DAIMLER CHRYSLER AG [DE]) 10 février 2011 (2011-02-10) * alinéas [0032] - [0043] * * figure 1 * ----- | 1-10 | |
| A | US 5 687 697 A (ISHIKAWA TAKASHI [JP]) 18 novembre 1997 (1997-11-18) * colonne 3, ligne 3 - colonne 6, ligne 27 * * figures 1,2 * ----- | 1-10 | DOMAINES TECHNIQUES RECHERCHES (IPC) B60K F02M |

Le présent rapport a été établi pour toutes les revendications

| Lieu de la recherche | Date d'achèvement de la recherche | Examinateur |
|---|---|---|
| Munich | 18 janvier 2012 | Adacker, Jürgen |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

**ANNEXE AU RAPPORT DE RECHERCHE EUROPEENNE
RELATIF A LA DEMANDE DE BREVET EUROPEEN NO.**

EP 11 17 0823

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

18-01-2012

| Document brevet cité au rapport de recherche | | Date de publication | Membre(s) de la famille de brevet(s) | | Date de publication |
|---|---|---|---|---|---|
| US 7448367 | B1 | 11-11-2008 | CN | 101344054 A | 14-01-2009 |
| | | | EP | 2014904 A2 | 14-01-2009 |
| | | | KR | 20090007247 A | 16-01-2009 |
| | | | US | 7448367 B1 | 11-11-2008 |
| EP 1674318 | A1 | 28-06-2006 | AT | 366198 T | 15-07-2007 |
| | | | DE | 102004063008 A1 | 20-07-2006 |
| | | | EP | 1674318 A1 | 28-06-2006 |
| | | | JP | 4619284 B2 | 26-01-2011 |
| | | | JP | 2006176114 A | 06-07-2006 |
| | | | US | 2006191578 A1 | 31-08-2006 |
| DE 102009036265 A1 | | 10-02-2011 | AUCUN | | |
| US 5687697 | A | 18-11-1997 | JP | 2910607 B2 | 23-06-1999 |
| | | | JP | 8230493 A | 10-09-1996 |
| | | | US | 5687697 A | 18-11-1997 |

EPO FORM P0460

Pour tout renseignement concernant cette annexe : voir Journal Officiel de l'Office européen des brevets, No.12/82

## RÉFÉRENCES CITÉES DANS LA DESCRIPTION

**Documents brevets cités dans la description**

- US 6167920 B
- US 7448367 B
- WO 2007085585 A